# DEMANDE DE BREVET EUROPEEN

(11) **EP 2 407 818 A1**
(43) Date de publication de la demande: **18.01.2012**
(21) Numéro de dépôt: 11173626.0
(22) Date de dépôt: 12.07.2011
(51) Int. Cl.: G02C 13/00

(54) **Dispositif de simulation de configuration d'environnement d'activité et procédé d'aide au choix d'un verre progressif**

(30) Priorité: 15.07.2010 FR 1055761
(71) Demandeur: Ergoptic, 28500 Garnay (FR)
(72) Inventeur: Pillet, Jean-Marie, 28500 Garnay (FR)
(74) Mandataire: Debay, Yves

(57) **Abrégé**

L'invention propose un procédé de simulation de configuration d'environnement d'activité pour l'aide au choix d'utilisateur (1) d'un verre progressif mis en oeuvre par un système comportant des moyens (200) de traitement de données avec des moyens (203) d'affichage, des moyens (202) de mémorisation, une table (100) à au moins deux plateaux (101) indépendants, plusieurs sources (102) lumineuses connectées au moyen (200) de traitement étant réparties sur une surface des deux plateaux (101) et au moins un capteur (201) de mouvement. Le procédé comporte au moins une étape de positionnement des plateaux (101) de la table (100) selon une configuration d'environnement d'activité de l'utilisateur (1), une étape d'allumage d'une première source (102a) lumineuse, une étape de positionnement de l'utilisateur (1) selon une position corporelle habituelle de son environnement d'activité et selon une position initiale de la tête de l'utilisateur (1) qui regarde la première (102a) source lumineuse, une étape d'extinction de la première source (1 02a) lumineuse, une étape de réalisation d'une cartographie (306) des positions (304) de l'oeil ou des yeux, une étape de traitement par les moyens (200) de traitements des cartographies (306) des positions (304) de l'oeil ou des yeux.

## Description

La présente invention concerne le domaine de l'optique et plus particulièrement des verres progressifs qui peuvent être choisis selon la configuration d'un environnement d'activité pour lequel ils sont utilisés.

Les verres progressifs sont destinés aux personnes souffrant de la presbytie. La presbytie est un trouble visuel dû à un vieillissement de l'oeil qui rend difficile la focalisation de la vision de près. Une personne presbyte a donc besoin d'une correction de sa vision de loin différente de la correction de sa vision de près.

Une première solution de correction est l'utilisation de deux paires de verres correcteurs : une paire pour la vision de loin et une autre paire pour la vision de près. Cette solution pose le problème de la manipulation de chaque paire de verres selon la distance de l'objet que l'on souhaite regarder.

Une deuxième solution de correction est l'utilisation de verres correcteurs à doubles foyers. Dans ce cas, la correction dépend de la direction du regard à travers les verres. Ce type de verre a l'inconvénient de ne pas disposer d'une correction progressive entre la partie du verre destinée à la vision de loin et la partie du verre destinée à la vision de près.

Une troisième solution de correction est l'utilisation de verres progressifs. Pour ce type de verres, il existe une correction progressive corrigeant la vision intermédiaire entre la partie du verre pour la vision de loin et la partie du verre pour la vision de près.

Un verre progressif présente plusieurs zones de vision qui dépendent de valeurs de puissances optiques :
- une zone de vision de loin située sur la partie haute du verre,
- une zone de vision de près situé sur la partie basse du verre,
- une zone de progression entre la zone de vision de loin et la zone de vision de près.

En outre, deux zones d'aberration dues à un astigmatisme perturbant la vision délimitent latéralement la zone de progression et, dans une moindre mesure, la zone de vision de près.

Plusieurs configurations et qualités de verres progressifs sont disponibles. Par exemple, pour des configurations de verre doux, les zones de progression et de vision de près sont plus étroites que des configurations de verre dur. Une personne, selon sa configuration d'environnement d'activité, pourra avoir besoin d'un verre progressif de moindre qualité et donc moins cher, alors que pour une autre personne, des verres de plus haute qualité seront nécessaires pour réaliser son activité. Le problème est donc de fournir un dispositif et un procédé d'aide au choix, pour un porteur de verres progressifs, du verre progressif le plus adapté à son activité ainsi qu'à sa vision.

La présente invention a pour but de palier ce problème en proposant un procédé facile à mettre en oeuvre où le futur porteur de verres progressifs pourra se rendre compte des avantages et des limites d'un verre par rapport à un autre pour sa propre activité.

Ce but est atteint par un procédé de simulation de configuration d'environnement d'activité pour l'aide au choix d'utilisateur d'un verre progressif mis en oeuvre par un système comportant au moins des moyens de traitement de données avec des moyens d'affichage, des moyens de mémorisation, des moyens de saisie de données ou d'instructions, une table à au moins deux plateaux indépendants, chaque plateau étant réglable manuellement ou électriquement en profondeur, en hauteur, en inclinaison et en orientation pour reconstituer un environnement d'activité, plusieurs sources lumineuses connectées au moyen de traitement s'allumant aléatoirement étant réparties sur une surface des deux plateaux et au moins un capteur de mouvement pour détecter les mouvements de la tête d'un utilisateur, le procédé comportant au moins les étapes suivantes :
- une étape de positionnement des plateaux de la table selon une configuration d'environnement d'activité de l'utilisateur;
- une étape d'allumage d'une première source lumineuse par les moyens de traitements ;
- une étape de positionnement de l'utilisateur selon une position corporelle habituelle de son environnement d'activité et selon une position initiale de la tête de l'utilisateur qui regarde la première source lumineuse;
- une étape d'enregistrement de la position initiale de l'oeil ou des yeux par les moyens de mémorisation ;
- une étape d'extinction de la première source lumineuse par les moyens de traitement ;
le procédé est caractérisé en ce qu'il comprend en outre :
- une étape de réalisation d'une cartographie des positions de l'oeil ou des yeux ;
- une étape de traitement par les moyens de traitements des cartographies des positions de l'oeil ou des yeux.

Selon une autre particularité, l'étape réalisation d'une cartographie des positions de l'oeil ou des yeux comporte au moins les étapes suivantes, ces étapes se répétant jusqu'à un nombre de positions de l'oeil ou des yeux enregistrés par les moyens d'enregistrement au moins égal au nombre de sources lumineuses de la table :
- une étape d'allumage d'une autre source lumineuse de la table par les moyens de traitement ;
- une étape de suivi du mouvement de la tête de la source lumineuse précédente vers l'autre source lumineuse allumée par au moins un capteur de mouvement ;
- une étape de comparaison par les moyens de traitement du mouvement de la tête de la source lumineuse précédente vers l'autre source lumineuse avec un mouvement virtuel de la tête calculé par les moyens de traitement pour déterminer la position de l'oeil ou des yeux ;
- une étape d'enregistrement de la position de l'oeil ou des yeux par les moyens de mémorisation ;
- une étape d'extinction de l'autre source lumineuse de la table par les moyens de traitement.

Selon une autre particularité, l'étape de traitement réalisée par les moyens de traitement consiste en la superposition d'au moins une cartographie de courbes isométriques d'astigmatisme et/ou de puissance d'au moins un verre et de la cartographie des positions de l'oeil ou des yeux.

Selon une autre particularité, l'étape de traitement est suivie par une étape d'affichage de la ou des superpositions par les moyens d'affichage pour permettre la détermination du verre le plus adapté ou du meilleur compromis.

Selon une autre particularité, la position de l'oeil ou des yeux étant déterminée comme étant l'intersection entre la ligne de regard de l'oeil ou des yeux selon la position de l'oeil ou des yeux calculée par les moyens de traitement et d'un verre virtuel défini par les moyens de traitement.

Un autre but est atteint en proposant un système mettant en oeuvre le procédé selon l'invention, caractérisé en ce qu'il comprend au moins :
- des moyens de traitement de données mis en oeuvre par un processeur associé avec des moyens d'affichage, des moyens de mémorisation et des moyens de saisie,
- une table comportant au moins deux plateaux indépendants, chaque plateau étant réglable manuellement ou électriquement en profondeur, en hauteur, en inclinaison et en orientation pour reconstituer un environnement d'activité, plusieurs sources lumineuses s'allumant aléatoirement étant réparties sur la surface des deux plateaux;
- des capteurs de mouvements détectant les mouvements de la tête de l'utilisateur connectés aux moyens de traitement.

Selon une autre particularité, le nombre de sources lumineuses est égal à dix.

D'autres particularités et avantages de la présente invention apparaîtront plus clairement à la lecture de la description ci-après, faite en référence aux dessins annexés, dans lesquels:
- la figure 1 représente une table à deux plateaux selon une configuration d'environnement d'activité ;
- la figure 2 représente une vue latérale schématique du système mettant en oeuvre le procédé selon l'invention avec l'utilisateur ;
- la figure 3 représente une vue latérale schématique du système avec l'utilisateur ayant sa tête placée de telle manière qu'il regarde une première source lumineuse;
- la figure 4 représente une vue latérale schématique du système avec l'utilisateur ayant sa tête placée de telle manière qu'il regarde une deuxième source lumineuse après avoir regardé la première source lumineuse;
- la figure 5 représente un verre virtuel sur lequel sont placés la position de l'oeil ou des yeux avant et après la comparaison entre la mouvement de la tête et le mouvement calculé;
- la figure 6 représente le verre virtuel à travers lequel passe une ligne de regard ;
- la figure 7 représente schématiquement l'étape de superposition d'une cartographie de courbes isométriques d'astigmatisme et/ou de puissance d'un verre et de la cartographie des positions de l'oeil ou des yeux ;
- la figure 8 représente la superposition de la cartographie des positions de l'oeil ou des yeux avec une cartographie de courbes isométriques d'astigmatisme et/ou de puissance d'un premier type de verre ;
- la figure 9 représente la superposition de la cartographie des positions de l'oeil ou des yeux avec une cartographie de courbes isométriques d'astigmatisme et/ou de puissance d'un deuxième type de verre ;
- la figure 10 représente la superposition de la cartographie des positions de l'oeil ou des yeux avec une cartographie de courbes isométriques d'astigmatisme et/ou de puissance d'un troisième type de verre.

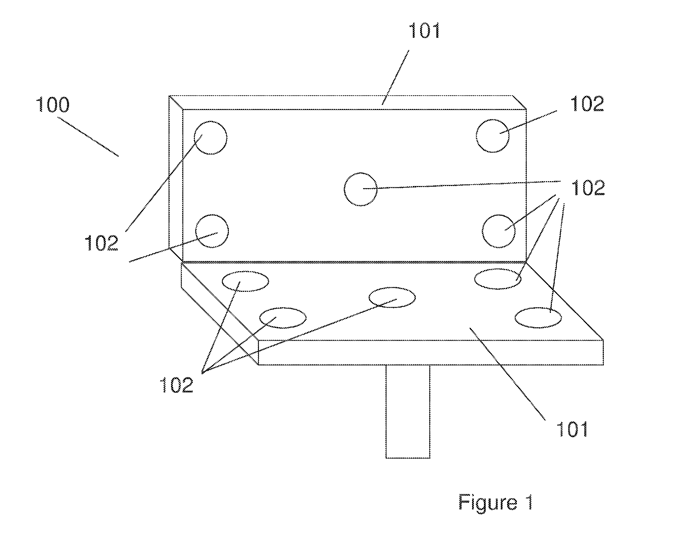

Dans la présente description, il sera fait référence aux figures 1, 2, 3, 4, 5, 6, 7, 8, 9 et 10.

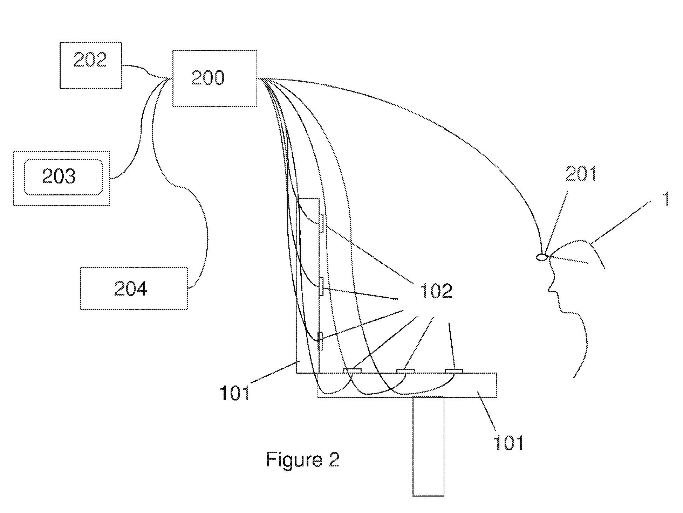

L'invention concerne un procédé de simulation de configuration d'environnement d'activité pour l'aide au choix d'utilisateur (1) d'un verre progressif. En référence à la figure 2, le procédé met en oeuvre un système comportant au moins des moyens (200) de traitement de données, par exemple un processeur, avec des moyens (203) d'affichage, par exemple l'écran d'un ordinateur, des moyens (202) de mémorisation, par exemple le disque dur d'un ordinateur, des moyens (204) de saisie de données ou d'instruction, par exemple le clavier d'un ordinateur. En référence à la figure 1, le système comporte en outre une table (100) avec au moins deux plateaux (101) indépendants. Chaque plateau (101) est réglable manuellement ou électriquement en profondeur, en hauteur, en inclinaison et en orientation pour reconstituer un environnement d'activité. Plusieurs sources (102) lumineuses, connectées au moyen (200) de traitement, sont réparties sur une surface des deux plateaux (101) dirigée vers l'utilisateur (1). Chaque source (102) lumineuse s'allume aléatoirement selon un programme contenu dans les moyens (200) de traitement. Le nombre de sources (102) lumineuses est par exemple et de façon non limitative égale à dix. Le système comporte en outre au moins un capteur (201) de mouvement pour détecter les mouvements de la tête d'un utilisateur (1). Le ou les capteurs sont par exemple fixés sur une monture de lunettes. L'utilisateur (1) chausse par exemple cette monture pour le déroulement du procédé.

Le procédé est caractérisé en ce qu'il comporte au moins les étapes suivantes dont une étape de positionnement des plateaux (101) de la table (100) selon une configuration d'environnement d'activité de l'utilisateur (1).

Durant cette étape, les plateaux (101) de la table (100) sont réglés de telle façon que la table reconstitue l'environnement d'activité de l'utilisateur. La reconstitution de l'environnement d'activité est, par exemple de façon non limitative, la reconstitution d'une table de dessin d'un dessinateur industriel ou d'un architecte ou d'un bureau de secrétaire avec un ordinateur posé sur le bureau.

Dans une étape suivante, l'allumage d'une première source (102a) lumineuse de la table (100) est commandé par les moyens (200) de traitements.

Grâce au programme contenu dans les moyens (200) de traitement, la première source (102a) lumineuse est allumée aléatoirement.

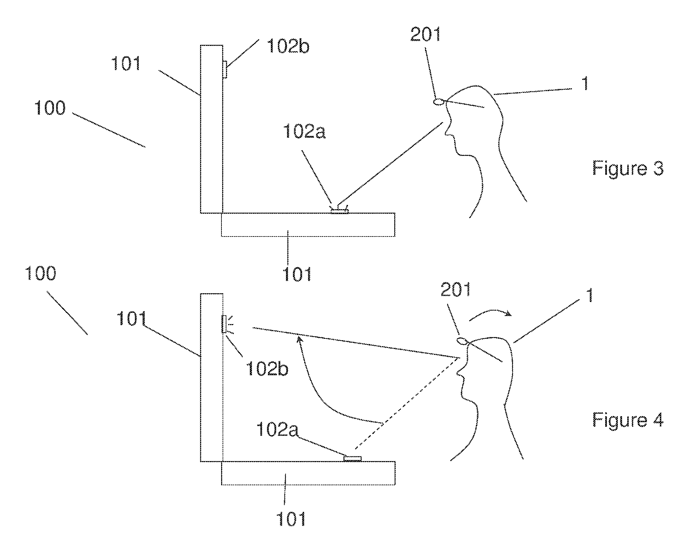

Dans une étape suivante, en référence à la figure 3, l'utilisateur (1) se positionne selon une position corporelle habituelle de son environnement d'activité et selon une position initiale de la tête de l'utilisateur (1) qui regarde la première (1 02a) source lumineuse.

Dans une étape suivante, la position initiale de l'oeil ou des yeux est enregistrée par les moyens (202) de mémorisation. La position initiale de l'oeil ou des yeux est déduite en fonction de la position initiale de la tête par un programme contenu dans les moyens (200) de traitement.

Cette position initiale permet de définir une position de référence pour la réalisation du procédé.

Dans une étape suivante, l'extinction de la première source (102a) lumineuse est commandée par les moyens (200) de traitement.

Dans une étape suivante, une cartographie (306) des positions (304) de l'oeil ou des yeux de l'utilisateur (1) peut alors être réalisée.

Cette étape de réalisation de la cartographie (306) peut être réalisée selon plusieurs étapes qui se répètent jusqu'à un nombre de positions (304) de l'oeil ou des yeux enregistrées par les moyens (202) d'enregistrement au moins égale, par exemple, au nombre de sources (102) lumineuses de la table (100) ou un nombre de positions (304) satisfaisant pour permettre la détermination du verre le plus adapté ou le meilleur compromis.

La réalisation de la cartographie comporte au moins une étape d'allumage d'une autre source (102b) lumineuse de la table (100) commandé par les moyens (200) de traitement.

Dans l'étape suivante, en référence à la figure 4, le mouvement de la tête de l'utilisateur (1) de la source (102) lumineuse précédemment allumée de la source (1 02a) lumineuse précédente vers l'autre source (102b) allumée est suivi par le ou les capteurs (201) de mouvement.

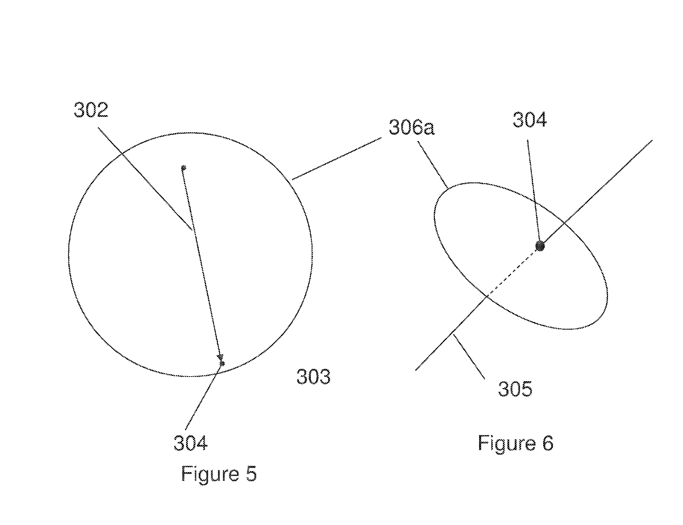

Afin de connaître ou déterminer la position de l'oeil ou des yeux, une étape de comparaison est mise en oeuvre par les moyens (200) de traitement. Les moyens (200) de traitement étant connectés aux sources (102) lumineuses peuvent calculer le mouvement (302) théorique de l'oeil ou des yeux. Donc, en comparant le mouvement de la tête avec le mouvement théorique de l'oeil ou des yeux, les moyens (200) de traitement peuvent calculer la position de l'oeil ou des yeux sur un verre (306a) virtuel défini par les moyens (200) de traitement. Ce verre (306a) virtuel est équivalent à un verre réel que l'utilisateur (1) portera dans son environnement d'activité réel. En référence à la figure 6, la position de l'oeil ou des yeux étant déterminée comme étant l'intersection (304) entre la ligne (305) de regard de l'oeil ou des yeux selon la position de l'oeil ou des yeux calculée par les moyens (200) de traitement et du verre (306a) virtuel défini par les moyens (200) de traitement.

La position de l'oeil ou des yeux est alors enregistrée par les moyens (202) d'enregistrement dans une étape suivante en référence à la figure 5.

L'extinction de l'autre source (102b) lumineuse de la table (100) est ensuite commandée par les moyens (200) de traitement.

L'ensemble des positions (304) de l'oeil ou des yeux enregistrées compose une cartographie de l'oeil ou des yeux de l'utilisateur (1).

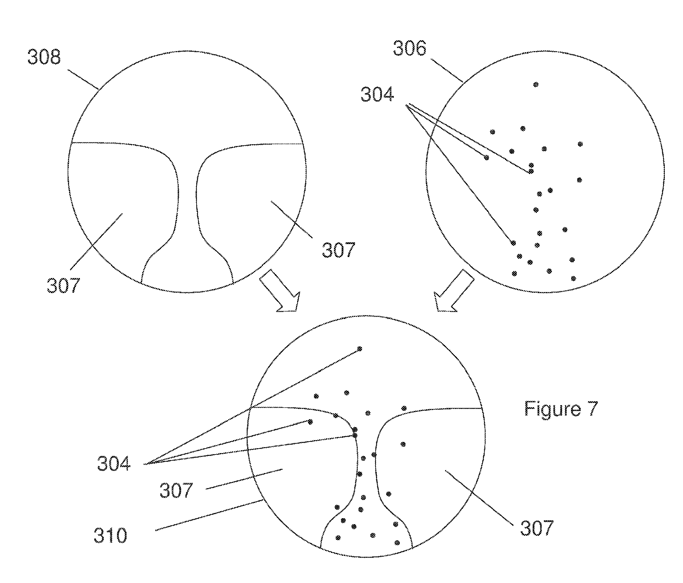

Après l'étape de réalisation de la cartographie, en référence à la figure 7, une étape de traitement par les moyens (200) de traitement réalise une superposition (310) d'au moins une cartographie (308) de courbes isométriques d'astigmatisme et/ou de puissance d'au moins un verre et de la cartographie (306) des positions (304) de l'oeil ou des yeux.

Une cartographie (308) de courbes isométriques d'astigmatisme et/ou de puissance représente une carte bidimensionnelle d'un verre représentant la distribution soit de la puissance, soit de l'astigmatisme caractérisant un verre.

La superposition (310) peut être faite pour plusieurs verres afin que l'utilisateur (1) puisse faire le choix d'un verre correspondant au mieux à ses besoins. Plus le nombre de positions (304) (304) de l'oeil ou des yeux se situant hors des zones (307) d'aberration sera faible, plus le verre répondra au mieux aux besoins de l'utilisateur (1).

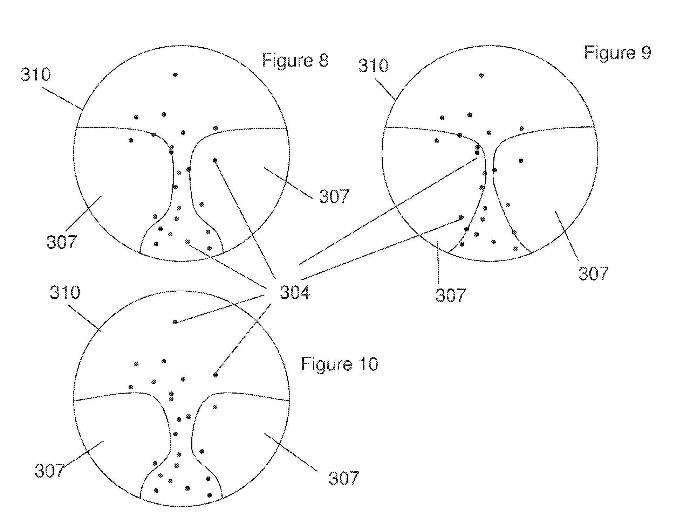

Les figures 8, 9 et 10 représentent des exemples de superpositions (310) réalisées pour différents types de verres.

Par exemple, pour le verre considéré dans la figure 9, le nombre de positions (304) de l'oeil ou des yeux se situant dans les zones (307) d'aberration est plus important le nombre de positions (304) du verre considéré dans la figure 8 qui a un nombre de positions (304) plus important le nombre de positions (304) pour le verre considéré dans la figure 10. Par conséquent, le verre considéré dans la figure 10 répond le mieux aux besoins de l'utilisateur (1).

Afin que l'utilisateur (1) fasse sont choix, une étape d'affichage de la ou des superpositions (310) par les moyens (203) d'affichage est réalisée pour permettre la détermination du verre le plus adapté ou le meilleur compromis.

Le démarrage du procédé est par exemple instruit par un opticien, par exemple, par les moyens (204) de saisie. De même, le procédé peut être, par exemple, piloté, mis en pause ou arrêté par l'opticien par l'intermédiaire les moyens (204) de saisie. Des données peuvent également être introduites dans les moyens (200) de traitement par les moyens (204) de saisie pour, par exemple, adapter le procédé à un environnement d'activité ou à l'utilisateur (1).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de simulation de configuration d'environnement d'activité pour l'aide au choix d'utilisateur (1) d'un verre progressif mis en oeuvre par un système comportant au moins des moyens (200) de traitement de données avec des moyens (203) d'affichage, des moyens (202) de mémorisation, des moyens (204) de saisie de données ou d'instruction, une table (100) à au moins deux plateaux (101) indépendants, chaque plateau (101) étant réglable manuellement ou électriquement en profondeur, en hauteur, en inclinaison et en orientation pour reconstituer un environnement d'activité, plusieurs sources (102) lumineuses connectées au moyen (200) de traitement s'allumant aléatoirement étant réparties sur une surface des deux plateaux (101) et au moins un capteur (201) de mouvement pour détecter les mouvements de la tête d'un utilisateur (1), le procédé comportant au moins les étapes suivantes :
- une étape de positionnement des plateaux (101) de la table (100) selon une configuration d'environnement d'activité de l'utilisateur (1) ;
- une étape d'allumage d'une première source (102a) lumineuse par les moyens (200) de traitements ;
- une étape de positionnement de l'utilisateur (1) selon une position corporelle habituelle de son environnement d'activité et selon une position initiale de la tête de l'utilisateur (1) qui regarde la première (102a) source lumineuse;
- une étape d'enregistrement de la position initiale de l'oeil ou des yeux par les moyens (202) de mémorisation ;
- une étape d'extinction de la première source (102a) lumineuse par les moyens (200) de traitement ;
le procédé est **caractérisé en ce qu'**il comprend en outre :
- une étape de réalisation par les moyens (200) de traitement et par les moyens (202) de mémorisation d'une cartographie (306) des positions (304) de l'oeil ou des yeux à partir de l'allumage aléatoire des sources (102) lumineuses commandé par les moyens (200) de traitement ;
- une étape de traitement par les moyens (200) de traitements ayant pour effet la superposition (310) par les moyens (200) de traitements des cartographies (306) des positions (304) de l'oeil ou des yeux et d'au moins une cartographie (308) de courbes isométriques d'astigmatisme et/ou de puissance d'au moins un verre ;
- une étape d'affichage de la ou des superpositions (310) par les moyens d'affichage (203) permettant la détermination du verre le plus adapté ou le meilleur compromis.

2. Procédé selon la revendication 1, **caractérisé en ce que** l'étape de réalisation d'une cartographie (306) des positions (304) de l'oeil ou des yeux comporte au moins les étapes suivantes, ces étapes se répétant jusqu'à un nombre de positions (304) de l'oeil ou des yeux enregistrés par les moyens (202) d'enregistrement au moins égal au nombre de sources (102) lumineuses de la table (100) :
- une étape d'allumage d'une autre source (102b) lumineuse de la table (100) par les moyens (200) de traitement ;
- une étape de suivi du mouvement de la tête de la source (102a) lumineuse précédente vers l'autre source (102b) lumineuse allumée par au moins un capteur (201) de mouvement ;
- une étape de comparaison par les moyens (200) de traitement du mouvement de la tête de la source (102a) lumineuse précédente vers la deuxième source (102b) lumineuse avec un mouvement virtuel de la tête calculé par les moyens (200) de traitement pour déterminer la position de l'oeil ou des yeux ;
- une étape d'enregistrement de la position de l'oeil ou des yeux par les moyens (202) de mémorisation ;
- une étape d'extinction de l'autre source (102b) lumineuse de la table (100) commandée par les moyens (200) de traitement.

3. Procédé selon la revendication 1, **caractérisé en ce que** l'étape de traitement réalisée par les moyens (200) de traitement consiste en la superposition (310) d'au moins une cartographie (308) de courbes isométriques d'astigmatisme et/ou de puissance d'au moins un verre et de la cartographie (306) des positions (304) de l'oeil ou des yeux.

4. Procédé selon les revendications 1 et 3, **caractérisé en ce que** l'étape de traitement est suivi par une étape d'affichage de la ou des superpositions (310) par les moyens (203) d'affichage pour permettre la détermination du verre le plus adapté ou du meilleur compromis.

5. Procédé selon les revendications 1 à 4, **caractérisé en ce que** la position de l'oeil ou des yeux étant déterminée comme étant l'intersection (304) entre la ligne (305) de regard de l'oeil ou des yeux selon la position de l'oeil ou des yeux calculée par les moyens (200) de traitement et d'un verre (306a) virtuel défini par les moyens (200) de traitement.

6. Système mettant en oeuvre le procédé selon les revendications 1 à 5, **caractérisé en ce qu'**il comprend au moins
- des moyens (200) de traitement de données mis en oeuvre par un processeur associé avec des moyens (203) d'affichage, des moyens (202) de mémorisation et des moyens (204) de saisie,
- une table (100) comportant au moins deux plateaux (101) indépendants, chaque plateau (101) étant réglable manuellement ou électriquement en profondeur, en hauteur, en inclinaison et en orientation pour reconstituer un environnement d'activité, plusieurs sources (102) lumineuses s'allumant aléatoirement étant réparties sur la surface des deux plateaux (101) ;
- des capteurs (201) de mouvements détectant les mouvements de la tête de l'utilisateur (1) connectés aux moyens (200) de traitement.

7. Système selon la revendication 6, **caractérisé en ce que** le nombre de sources (102) lumineuses est égal à dix.
